(19) Europäisches Patentamt
European Patent Office
Office européen des brevets

(11) **EP 4 726 349 A1**

(12) **EUROPEAN PATENT APPLICATION**

(43) Date of publication:
**15.04.2026 Bulletin 2026/16**

(21) Application number: **24315470.5**

(22) Date of filing: **10.10.2024**

(51) International Patent Classification (IPC):
***G01M 11/00*** *(2006.01)*

(52) Cooperative Patent Classification (CPC):
**G01M 11/3127; G01M 11/3145**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Solutions and Networks Oy
02610 Espoo (FI)**

(72) Inventor: **Dorize, Christian
78320 LE MESNIL-SAINT-DENIS (FR)**

(74) Representative: **Innovincia
2, rue Jean Lantier
75001 Paris (FR)**

(54) **LASER CONTROL FOR INTENSITY OTDR USING PHASE-MODULATED LIGHT**

(57) An apparatus for monitoring the intensity of optical backscattering along an optical fiber line comprises an optical sensor for interrogating the optical fiber line with coherent light. The optical sensor comprises a laser and a laser controller. The optical sensor splits light from the laser into probe light and reference light, couples modulated probe light into the optical fiber line and makes measurements on a superposition of the reference light and light returned from the optical fiber line by optical backscattering. The optical sensor estimates a backscattering intensity profile along said optical fiber line based on said measurements. The laser controller adjusts a wavelength of the laser based at least in part on mismatch between at least a portion of the backscattering intensity profile and a reference profile.

300

FIG. 3

EP 4 726 349 A1

Description

## TECHNICAL FIELD

The present disclosure generally relates to optical systems, and more particularly relates to optical systems for monitoring long optical fiber links.

## BACKGROUND

Fiber-optic communication systems, such as terrestrial and undersea optical fiber links, may be continually monitored to detect, and locate, various faults in the system that may inhibit transmission of optical signals. Such monitoring is conventionally performed from an end of the link using optical time-domain reflectometry (OTDR) to estimate an impulse response of the communication system. This may include launching an optical pulse into the optical fiber link and measuring an intensity of optical back-scattering along the link as a function of the delay between transmitting the pulse and the arrival of a back-scattered portion of the pulse. In a variant of that technique, a train of optical pulses having desired auto-correlation properties may be used to improve the signal-to-noise ratio (SNR) for a target spatial resolution.

While intensity modulation has been typically used for monitoring for fiber breaks, a recently developed technique, which is disclosed, e.g., in European Patent Application No. EP24189130, uses phase-modulated light to obtain an optical backscattering intensity profile of a long optical fiber line. Such systems may require ultra-stable sources of coherent light to detect fiber events occurring at large distances from upstream optical amplifiers, where the optical signal is strongly attenuated.

## SUMMARY

An aspect of the present disclosure relates to an apparatus for monitoring an optical fiber line. The apparatus comprises an optical sensor comprising a laser and a laser controller. The optical sensor is configured to split light from the laser into probe light and reference light, to modulate the probe light, to couple modulated probe light into the optical fiber line, and to make measurements on a superposition of the reference light and light returned from the optical fiber line by optical backscattering in the optical fiber line. The optical sensor is further configured to estimate a backscattering intensity profile along said optical fiber line based on said measurements. The backscattering intensity profile represents a set of backscattering intensity values pertaining to a set of longitudinal sections of the optical fiber line, wherein each of the backscattering intensity values represents an intensity of light backscattered from a respective longitudinal section of the optical fiber line. The laser controller is configured to adjust a wavelength of the laser based at least in part on mismatch between at least a portion of the backscattering intensity profile and a reference profile.

In some implementations, the laser controller includes a laser wavelength stabilization circuit, the laser controller being configured to adjust a frequency response of said circuit based at least in part on the mismatch.

A related aspect of the present disclosure provides a method for monitoring optical fiber line. The method comprises: splitting light from a laser source into probe light and reference light; coupling the probe light into the optical fiber line to propagate therealong; making measurements on a superposition of the reference light and light returned by the optical fiber line by, at least in part, backscattering at different locations along the optical fiber line; and estimating a backscattering intensity profile along said optical fiber line based on said measurements. The method further includes adjusting a wavelength of the laser based at least in part on mismatch between at least a portion of the backscattering intensity profile and a reference profile.

In some implementations, the mismatch between at least a portion of the backscattering intensity profile and a reference profile is estimated based on a measure of slope mismatch between the at least a portion of the backscattering intensity profile and the reference profile.

## BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:

FIG. 1A is a block diagram that schematically illustrates an example of an apparatus for monitoring backscattering strength along an optical fiber line using phase-modulated probe light, coherent detection, and laser frequency stabilization;

FIG. 1B is a graph illustrating an example of an optical backscattering intensity (OBSI) profile estimated for a passive optical fiber link;

FIG. 2 is a diagram that schematically illustrates an example of a multi-span optical fiber line with a loopback optical link;

FIG. 3 is a diagram that schematically illustrates an example embodiment of the apparatus of FIG. 1 using feedback from a backscatter intensity profile estimator to tune a laser controller;

FIG. 4A is a graph illustrating an example of the backscattering intensity profile of an optical fiber line obtained in simulations using coherent measurements without feedback from backscattering intensity measurements to laser controller;

FIG. 4B is a graph illustrating an example of the backscattering intensity profile of the optical fiber line of FIG. 4A obtained in simulations using coherent measurements of backscattered light with the laser frequency stabilization using a first set of controller response parameters;

FIG. 4C is a graph illustrating an example of the backscattering intensity profile of the optical fiber line of FIG. 4A obtained in simulations using coherent measurements of backscattered light with the laser frequency stabilization using a second set of controller response parameters;

FIG. 5 is a flowchart of an example method for stabilization of the laser source of a sensor for monitoring optical backscattering intensity of an optical fiber line using coherent detection of backscattered light;

FIG. 6 is a graph illustrating an estimation of an OBSI slope mismatch measure using piece-wise linearization of a one-span OBSI profile estimate;

FIG. 7A is a graph illustrating an example OBSI profile of a multi-span optical fiber line obtained in simulations using the laser frequency stabilization and probe light modulation at a symbol rate of 0.5 MHz;

FIG. 7B is a graph illustrating an example OBSI profile of the multi-span optical fiber line of FIG. 7A obtained in simulations using the laser stabilization and probe light modulation at a symbol rate of 32 MHz;

FIG. 7C is a graph illustrating the example OBSI profile of FIG. 7B after spatial averaging using a 200 meter wide sliding window and 64:1 downsampling.

DETAILED DESCRIPTION

In the following description, for purposes of explanation and not limitation, specific details are set forth, such as particular circuits, circuit components, techniques, etc. in order to provide a thorough understanding of the described example embodiments. However, it will be apparent to one skilled in the art that the present disclosure may be practiced in other embodiments, embodiments that may depart from these specific details. In other instances, detailed descriptions of well-known methods, devices, and circuits may be omitted so as not to obscure the description of the exampled embodiments. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The term "polarization channel" may be used herein to refer to parts of an optical transmission system, such as a dual-polarization (DP) optical transmitter or a DP optical receiver, that operate predominantly on a selected polarization component of a light signal. Different polarization components of a light signal may also be referred to as polarization tributaries, e.g. with reference to a system where they may be separately processed. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example".

Furthermore, the following abbreviations and acronyms may be used in the present document:

"RF" Radio Frequency
"PSK" Phase Shift Keying
"M-PSK" PSK with an M-symbol constellation
"BPSK" Binary Phase Shift Keying
"QPSK" Quadrature Phase Shift Keying
"QAM" Quadrature Amplitude Modulation
"IQ" in-phase / quadrature
"DP" Dual Polarization
"PDM" Polarization-Division Multiplexing
"MIMO" Multi-Input Multi-Output
"MZM" Mach-Zehnder Modulator
"RHS" Right-Hand Side
"SMF" Single-Mode Fiber
"EDFA" Erbium-Doped Fiber Amplifier

Embodiments described below relate to an apparatus, and a corresponding method, for remote optical sensing of various irregularities of light propagation along an optical fiber, e.g. along an optical fiber line of an undersea optical communication system. The apparatus and method may use coherent optical detection, wherein the fiber-interrogating light ("probe light") and local oscillator light ("LO light") both originate from the same light source. Some embodiments of the apparatus and method may employ phase modulation of the probe light at an optical transmitter of the apparatus with code sequences having appropriate correlation and/or autocorrelation properties and a matched filtering at a coherent optical receiver to obtain a profile of intensity of optical backscattering along an optical fiber line, referred to herein as an optical backscattering intensity (OBSI) profile. An OBSI profile represents a set of backscattering intensity values pertaining to a set of longitudinal sections of the optical fiber line, wherein each of the backscattering intensity values represents an intensity of light backscattered from a respective longitudinal section of the optical fiber line.

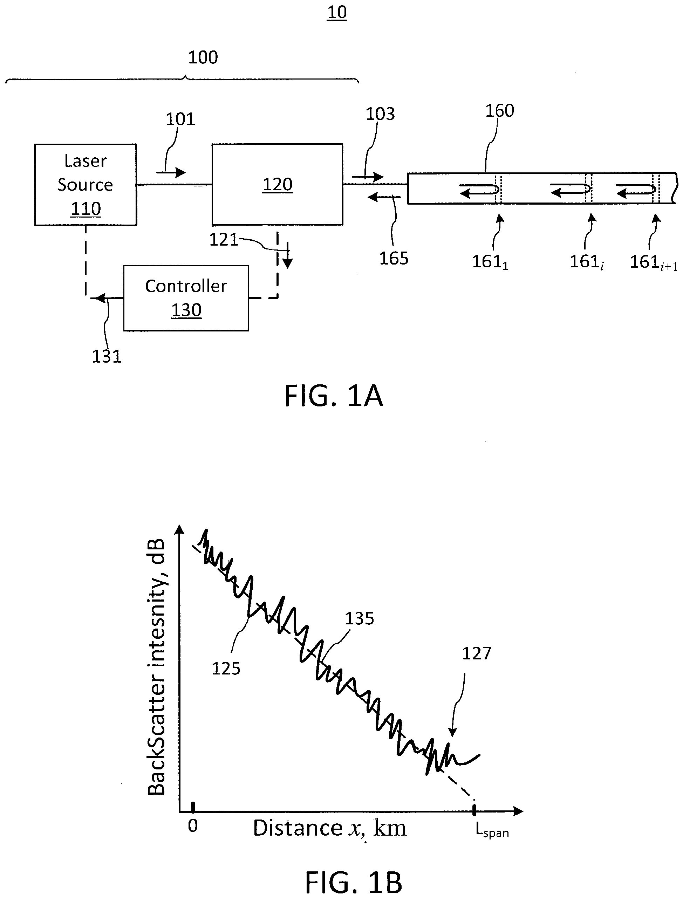

The set of longitudinal sections pertaining to an OBSI profile is typically a discrete set of longitudinal sections of the optical fiber line (e.g. a set of adjoining longitudinal sections, e.g. optical fiber segments $161_i$, FIG. 1A), wherein each longitudinal section has a finite length. This finite length is typically at least equal to a spatial resolution of the optical sensing ("gauge length") defined by a symbol rate $F_s$ used by the apparatus.

Embodiments can be contemplated, e.g. using one or more analog signal processors, wherein the set of longitudinal sections is a range of longitudinal positions in the optical fiber line, e.g. from a proximal position to a distal position in the optical fiber line. In other words, the set of longitudinal sections may by a continuous set of longitudinal sections, wherein longitudinal sections are point-like, e.g., correspond to cross sections of the optical fiber. Each longitudinal position can be associated with a respective cross section of the optical fiber line and with a respective backscattering intensity value that represents an intensity (or power) of light backscattered from the respective cross section.

Some embodiments of the apparatus and method may employ a PDM-MIMO sensing technique, in which orthogonal polarizations of probe light that are phase-modulated with orthogonal code sequences are used to obtain an optical back-scattering intensity profile of the optical fiber line.

FIG. 1A schematically illustrates an example optical system 10 including an optical fiber line 160 and a fiber sensing apparatus 100 ("apparatus 100") configured for monitoring optical backscattering along said optical fiber line 160 to detect various fiber events. In the diagram of FIG. 1A, blocks represent various electrical, optical, and electro-optical units of the apparatus 100, with optical and electrical connections between the units shown with solid and dotted lines, respectively. The apparatus 100 includes a light source 110, typically a narrow-linewidth laser ("laser 110"), optical and electrical hardware 120 configured for optically interrogating optical fiber ("interrogator 120"), and a controller 130 for stabilizing the wavelength of the laser light in time. In operation probe light 101 from the laser 110 is modulated by the interrogator 120, and modulated probe light 103 is coupled into the optical fiber line 160. The interrogator 120 is configured to measure return light 165 and perform optical backscatter intensity sensing along the optical fiber line 160.

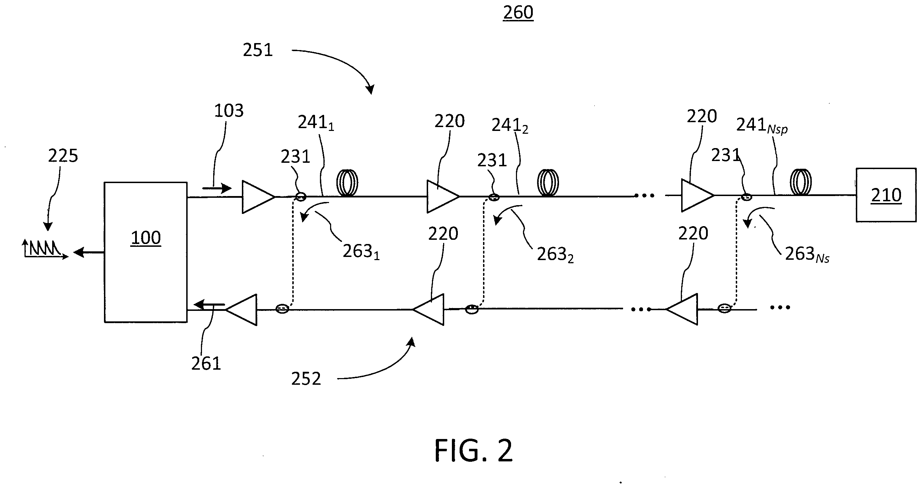

The optical fiber line 160 may be, for example, an optical fiber line of a deployed optical fiber communication system, and the apparatus 100 may be configured to monitor for various anomalies on the link, such as fiber breaks or other light propagation discontinuities and optical loss on the fiber line. In some implementations, the optical fiber line 160 may be, for example, an undersea optical fiber line that includes one or more line optical amplifiers and a loop-back optical fiber link, such as an optical fiber line 260 described below with reference to FIG. 2. The apparatus 100 operates by sensing the strength of the optical backscattering and reflections at different locations along the optical fiber line 160, such as Raleigh back-scattering in the optical fiber and back-reflections at optical interfaces and fiber brakes or cracks.

In some implementations, the interrogator 120 is configured to modulate the light 101 from the laser 110 according to a selected modulation pattern prior to coupling into the optical fiber line 160 as the modulated probe light 103. The interrogator 120 is further configured to mix the return light 165 with a portion of the laser light 101 tapped off from an output of the laser 110 prior to the modulation by the interrogator 120 ("reference light") and perform measurements on the mixed light, i.e. a superposition of the reference light and the return light 165. The return light 165 includes parts of the modulated probe light 103 that are reflected back toward the apparatus 100, e.g., by Rayleigh back-scattering at different segments $161_1, ..., 161_i, ...$ of the optical fiber line 160, or by reflections at various interfaces. The length $l_r$ of each segment 161; ("longitudinal section") that may be resolved by the measurements, i.e. the "gauge length", depends on the symbol rate of the probe light modulation, as described below. The return light 165 may further include amplified spontaneous emission (ASE) light originating from optical amplifiers that may be present in the optical fiber line 160. The interrogator 120 is configured to process the measurements to estimate an optical backscattering intensity (OBSI) profile (e.g. 125, FIG. 1B) along the optical fiber line 160 based on said measurements.

The interrogator 120 is configured to perform the measurements in a manner that is sensitive to a phase of an interference signal in the mixed light. The sensitivity of the measurements may depend on stability of the optical frequency F, or equivalently the wavelength $\lambda = c/F$, of the probe light 103 over a duration of time equal to a delay $\tau$ between the mixing light portions. The delay $\tau$ is the round-trip time of the modulated probe light 103 from the apparatus 100 to the location of optical backscattering being measured,

$$\tau = 2x/c_g, \qquad (1)$$

x being a distance to the back-scattering segment of the optical fiber, e.g. a fiber segment $161_i$, along the optical fiber 160 being interrogated, and $c_g$ being a group velocity of the probe light 103 in the optical fiber 160. For a 100 km long span of optical fiber, this round-trip time may be about 1 millisecond (ms). In practice, the optical frequency or wavelength of the probe light 103 may not remain sufficiently stable over such a long time, even with the best narrow-linewidth internally-stabilized laser sources currently available on the market. At frequencies below about 1 MHz, the power spectral density (PSD) of the optical frequency noise of a laser is typically dominated by so-called flicker noise, and increases toward the zero frequency, $f = 0$, approximately as $1/f$. The farther away is the location in the optical fiber being interrogated, the stronger may be the contribution of the $1/f$ laser frequency noise in the measured signal, and the lower the sensitivity of the backscattering intensity measurement to disturbances of the fiber at that location. The random drift of the optical phase of the laser light associated with the laser frequency noise may obscure observations of optical fiber disturbances, in particular at large distances where the optical power of the modulated probe light 103 is strongly attenuated by the loss in the optical fiber being interrogated.

FIG. 1B schematically illustrates an example OBSI profile $I_{dB}(x)$ 125 that may be obtained by the interrogator 120 of the sensor apparatus 100 for the optical fiber line 160, e.g. for one optical fiber span thereof ("OBSI profile 125"). Here, the term "span" is used to refer to a length of optical fiber that is absent of optical amplifiers, e.g. a span can be a length of optical fiber connecting two consecutive optical amplifiers that may be present in the optical fiber line 160 (not shown in FIG. 1). The OBSI profile 125 describes the estimated strength of the optical backscattering at various locations x along the optical fiber span, measured in dB:

$$I_{dB}(x) \sim 10 \cdot Log\ (I(x)), \qquad (2)$$

where I(x) represents the optical power of the probe light 103 scattered back at a location at distance x from the apparatus 100 along the optical fiber line 160, and $I_{dB}(x)$ represents that optical power measured in decibels (dB), as typically used in the art of optical fiber communications and optical fiber monitoring. In an example implementation, the interrogator 120 may generate and/or store an OBSI profile 125 in the form of a set of intensity values pertaining to a set of longitudinal sections of the optical fiber line 160, e.g. the optical fiber segments $161_{i=k}$. The set of intensity values, $I(x_k)$, or $I_{dB}(x_k)$, may typically be ordered in increasing or decreasing order of the distances "$x_k$" to corresponding longitudinal sections along the optical fiber line 160.

FIG. 1B further shows an example reference profile $I_{Ref}(x)$ 135 for the span (dashed line). The reference profile $I_{Ref}(x)$ 135 may represent an expected OBSI profile for the span in the absence of noise. In the log-linear space of FIG. 2, the reference profile 135 is a straight line, which slope can be estimated, e.g., based on a known optical loss of the optical fiber of the span. By way of example, for a typical SMF the optical loss is approximately 0.2 dB/km, so that the reference profile 135 for a span of SMF may be a straight line in the log-linear plane of FIG.2 having a constant slope $S_{ref} \cong -0.2$ dB/km, and may be described by the following equation (3):

$$I_{ref}(x) = I_{ref0} + S_{ref} x \qquad (3)$$

where x is a coordinate along the optical fiber line 160 measured in kilometers (km), and $I_{ref0}$ is an offset parameter. Here, "log-linear" refers to a mapping of intensity values "$I$" in a logarithmic representation, e.g. in decibel, to corresponding distance values "x". This mapping may be described by a discrete or continuous function $C \cdot \log_B I(x)$, where C is a constant parameter and $B$ is the base of the algorithm. For the purposes of this disclosure, all such mappings are equivalent to mapping the intensity values "$I$" expressed in dB to the distance "$x$" measured in units of distance, e.g. km (equation (2)), since changing the base, of the logarithm is equivalent to a simple linear scaling. In the absence of noise, a log-linear representation of an OBSI profile of a length of uniform optical fiber is expected to be a straight line with a constant negative slope defined, at least to a large degree, by the optical loss of the fiber.

The estimated OBSI profile 125 typically has noisy behavior due to, at least in part, coherent fading and laser frequency noise. The coherent fading arises due to a random or quasi-random nature of coherent interference of light scattered at different locations along the optical fiber and may also be referred to as the coherent noise or speckle noise; this noise typically manifests itself as random oscillations about the baseline defined, at least in part, by the optical loss in the fiber (reference profile 135 in FIG. 1B) and may be somewhat reduced by spatial averaging of the estimated OBSI profile 125 as described below.

The laser frequency noise may result in the disappearance, or at least weakening, of the interference signal in the superposition of the return and probe light, and a loss of sensitivity of the backscatter intensity measurement. The deleterious effect of the laser frequency noise may be particularly pronounced at the tail end of the span, e.g. as indicated at 127 in FIG. 2, where the probe light is strongly attenuated by the fiber propagation. Because of this attenuation of the probe light at the tail end of a fiber span, the signal-to-noise ratio (SNR) of the corresponding back-scattering signal recorded by the interrogator 120 is reduced, leading to the appearance of a noise floor above the expected reference profile 135, complicating the detection of fiber events.

Turning back to FIG. 1A, the controller 130 is connected to the interrogator 120 to receive OBSI data 121 therefrom comprising at least a portion of the estimated OBSI profile 125. The controller 130 is further configured to tune the laser 110 to dynamically adjust the optical frequency $F$, or equivalently the wavelength $\lambda=c/F$, of the laser light 101 in a manner that lessens the deleterious effects of the laser phase drift on the estimation of the intensity of optical back-scattering at large distances from the sensor apparatus 100 and/or under small SNR, e.g. at a tail end of an optical fiber span. Here dynamically means continuously or quasi-continuously, i.e. repeatedly with a repetition rate sufficiently high for the wavelength to be adjusted while the deleterious effects are still small.

In an example implementation, the controller 130 is configured to dynamically adjust the wavelength $\lambda$ of the laser 110 based at least in part on mismatch, i.e. some measure of differences, between the OBSI profile 125 estimated by the interrogator 120, and the reference profile 135, e.g. so as to reduce the profile mismatch. In some implementations, the controller 130 may include memory storing one or more characteristics of the reference profile 135, e.g. a slope $S_{ref}$ thereof in a log-linear representation of the profile. In some embodiments, the wavelength adjustment may be performed so as to reduce overall slope mismatch between the estimated OBSI profile 125 of one span of the optical fiber line 160 and the reference profile 135. In some implementations, the adjustment may be performed so as to reduce mismatch, i.e. a measure of differences, in local slope values between the estimated OBSI profile 125 and the reference profile 135 at one or more locations along the optical fiber line 160 being monitored, or along a selected span thereof.

Referring to FIG. 2, the apparatus 100 may be used to monitor the optical backscattering intensity along a multi-span optical fiber line 260, which is an example of the optical fiber line 160 of FIG. 1A. In this example, the apparatus 100 may output a multi-span OBSI profile estimate 225 comprising a sequence of one-span OBSI profiles corresponding to the sequence of spans of the optical fiber line 260. The optical fiber line 260 includes a forward optical fiber path 251, e.g. for transmitting information-bearing optical signal to an end terminal 210, and a return optical fiber path 252. The optical apparatus 100 is connected to launch the probe light 103 into the forward optical fiber path 251, and to receive back return light 261 from the return optical fiber path 252. The forward optical fiber path 261 may include a sequence of $N_{sp} > 1$ optical fiber spans $241_1$, $241_2$, ..., $241_{Nsp}$ ("spans 241"), connected by line optical amplifiers 220. The forward optical fiber path 261 may be, e.g., a part of an undersea optical communication system. The optical amplifiers 220 are typically but not necessarily erbium-doped fiber amplifiers (EDFAs). The return optical fiber path 252 is provided for transmitting back-scattered light $263_1$, $263_2$, ..., $263_{Nsp}$ from each of the corresponding line segments ("back-scattered light 263"), e.g. using backward-oriented optical couplers 231, back to the receiver port of the interrogation apparatus 100. The optical couplers 231 are typically disposed next to each of the line amplifiers 220 downstream thereof at a same node. Since the back-scattered light 263 is typically low in power and the propagation path back to the apparatus 100 is typically long, the return optical fiber path 252 also typically includes a series of optical amplifiers 220, e.g. EDFAs. As the result, the return light 261 includes, in addition to the back-scattered portions of the probe light 121, the amplified spontaneous emission ("ASE light") from the optical amplifiers 220, which may exceed in power the back-scattered probe light. In this example, the apparatus 100 may produce a multi-span OBSI profile estimate 225 comprising a sequence of one-span OBSI profiles corresponding to the sequence of spans 241 of the optical fiber line 260.

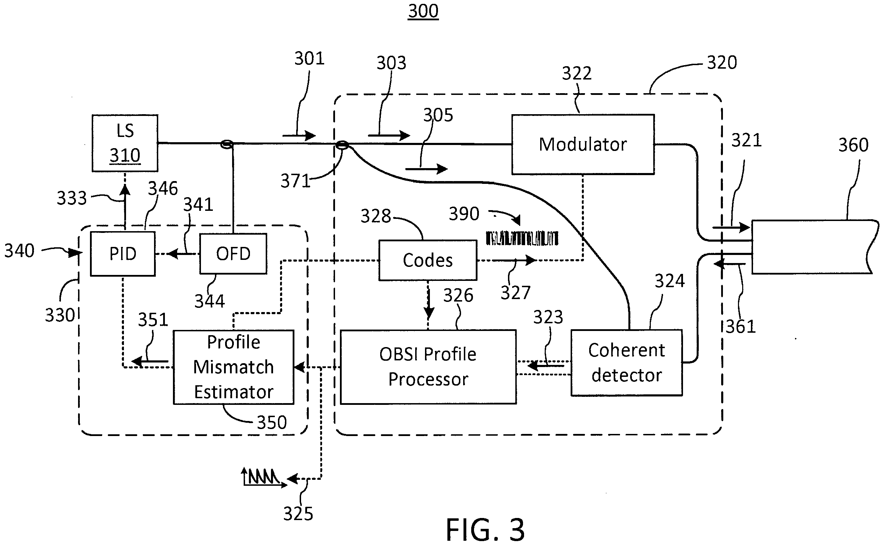

FIG. 3 illustrates an example sensor apparatus 300 ("apparatus 300") for monitoring an optical fiber line 360. The optical fiber line 360 may be, e.g., an example of the multi-span optical fiber line 260 illustrated in FIG. 2. The apparatus 300, which may be an example of the apparatus 100, is configured to estimate and output an OBSI profile 325 for the optical fiber line 360 to detect and locate fiber affecting events. In some implementations, the apparatus 300 may be configured for dual-polarization (DP) MIMO sensing, e.g. as described in the European Patent Application EP24189130. In the illustrated example, the apparatus 300 includes a coherent light source 310, a laser controller 330, and optical and electrical hardware 320 configured for optically interrogating the optical fiber line 360 ("interrogator 320"). Optical and electrical connections are shown in FIG. 3 with solid and dotted lines, respectively. The interrogator 320, the laser 310, and the laser controller 330 may be embodiments of the interrogator 120, the laser 110, and the controller 130, respectively, described above with reference to FIG. 1A.

The light source 310 may be, e.g., a tunable single-frequency laser ("laser 310") having a narrow linewidth, about 10 kHz or smaller in some embodiments. The emission wavelength $\lambda$ of the light source 310 is tunable responsive to a signal 333 from the laser controller 330. The laser controller 330 is configured to dynamically tune the center wavelength $\lambda$ of the light 301 emitted by the laser 310 ("laser wavelength") to provide receiver-assisted stabilization of the laser wavelength, e.g. responsive to an estimate of the OBSI profile 325 as described below in further detail.

The interrogator 320 includes an optical modulator 322, a coherent optical detector (COR) 324, and a processor 326. In operation, light 301 from the laser 310 is split by a coupler 371 into probe light 303 and LO light 305 ("reference light"). The probe light 303 is coupled into an optical input of the modulator 322, and the LO light 305 is coupled into an LO input of the COR 324. The optical modulator 322 is configured to modulate the probe light 301 in phase and/or amplitude with a modulation signal 327 and launch modulated probe light 321 into a proximate end of the optical fiber line 360. In some implementations, the optical modulator 322 may be a DP optical modulator configured for polarization division multiplexing (PDM). In some implementations, the optical modulator 322 may be an IQ electro-optic (EO) modulator, e.g. may comprise a nested Mach-Zehnder modulator (MZM).

In an example implementation, the modulation signal 327 is generated by a code signal generator (CSG) 328. The CSG 328 and the processor 326 may be implemented as individual devices or in a single digital processor, for example. The modulation signal 327 comprises repetitions of a modulation code 390 having a symbol rate $F_s = 1/T_s$. Each repetition of the modulation code 390 spans a code period $T_{code} = N \cdot T_s$, where $N$ denotes the number of symbols in one repetition of the modulation code 390 ("code length"). The symbol rate $F_s$ of the modulation code 390 defines the spatial resolution $l_r$ of the back-scattering intensity sensing, $l_r \sim 2 \cdot T_s \cdot v$, v being the group propagation velocity of the probe light 321 in the optical fiber line 360. The code period $T_{code}$ should be longer that the round-trip time $T_{RTT} = 2L/v$ of the probe light in the optical fiber line 360, i.e. $T_{code} > T_{RTT}$; here $L$ is the length of the optical fiber line 360 to be interrogated.

Portions of the probe light 321 that are reflected back at various locations along the optical fiber line 360, e.g. due to the Raleigh back-scattering, are returned back to the apparatus 300 with return light 361. The COR 324 is configured to mix the LO light 305 with the return light 361 received from the optical fiber line 360, and to sample the superposition at a sampling rate $R_s$ to obtain a stream, or time sequence, of return signal measurements 323. The sampling rate $Rs$ is at least equal to the code symbol rate $Fs$ of the modulation code 390 and may be a multiple of the code symbol rate $Fs$. In an example implementation, the COR 324 may include an optical mixer, e.g. a DP 90° optical hybrid, coupled in each polarization to an array of balanced photodetectors followed by an amplification and digitization circuitry to output in-phase (I) and quadrature (Q) digital electrical signals, which provide a complex representation of the optical field of the return light mixed with the LO light in each polarization channel. The sampling at the COT 324 and the generation of the modulation signal 327 for the modulator 320 may be synchronized to a same clock. The time sequence of return signal measurements 323, $\{S_i\}$, may span a large number of the code periods $T_{code}$. Consecutive return signal measurements, e.g. $S_i$ and $S_{i+1}$, may be separated in time by one symbol period $T_s$ of the modulation code 390 or an integer multiple of the $T_s$.

In some implementations, the processor 326 is configured to perform code-matched filtering of the stream of return signal measurements 323 to obtain the OBSI profile 325 of the optical fiber line 360, e.g., as described in the European Patent Application No. EP24189130. In an example implementation, the OBSI profile 325 is a sequence of intensity values, or logarithms (e.g., dB) thereof, corresponding to a sequence of locations along the optical fiber line, e.g., in the order of light propagation distances $x_k$ to said locations along the optical fiber line, each intensity value being an estimate of the optical backscattering intensity at said location. The processing performed by the processor 326 may include, e.g. correlating successive code-length segments of the stream of return signal measurements 323 with a copy of the code sequence 390 to obtain, for each processed segment, a time sequence $\{I_k\}_n = \{I_{k=1}, ..., I_{k=N}\}_n$ of $N$ intensity values $I_k$ ("code-length sequence"), with successive intensity values $I_k$, $I_{k+1}$ corresponding to consecutive symbol periods $T_s$ in the stream of return signal measurements 323; here k is the time index of a $k$-th intensity value $I_k$, $k = 1, ..., N$, and $n$ is a segment index in a time sequence of the segments. The processing may further include obtaining the OBSI profile 325 along the optical fiber line 360 by averaging, at least, corresponding intensity values $I_k$ over a number of code periods $T_{code}$ and selecting for the OBSI profile 325 a segment of the averaged time sequence $\{I_k\}$ comprising those of the (averaged) intensity value $I_k$ that correspond to locations $x_k$ along the optical fiber link 360, the selected (averaged) intensity value $I_k$ representing the intensity of optical backscattering at said location.

The laser controller 330 is configured to provide receiver-assisted stabilization of the center wavelength $\lambda$ of the light 301 ("laser wavelength") responsive, in part, to feedback from the OBSI processor 326. In operation, the laser controller 330 may tune the laser 310 to dynamically adjust the laser wavelength $\lambda$ such as to reduce variations of the wavelength in time. In an example implementation, the tuning is based at least in part on an estimation of mismatch between the OBSI profile 325 received from the processor 326 and a reference profile and may be performed so as to reduce the mismatch.

In the illustrated in FIG. 3 example, the laser controller 330 includes a processing unit 350 connected to a laser wavelength stabilization circuit 340 comprising an optical frequency discriminator (OFD) 344 and a servo controller 346. The processing unit 350 is configured to compute a measure of mismatch between the OBSI profile 325 and a reference profile. The controller 330 may be configured with memory to store one or more parameters of the reference profile used in the estimation of the mismatch, e.g. one or more reference slope values representing the slope or slopes of the reference profile. The OFD 344 is connected to receive a small portion of the light 301 tapped off from an output of the laser 310, and to output an electrical signal 341 indicative of, e.g. approximately proportional to, a difference $\Delta F = (F - F_{ref})$ between a current value of the laser frequency $F$ and a reference optical frequency $F_{ref}$ (or, approximately, to a wavelength shift $\Delta\lambda = (\lambda - \lambda_{ref})$, where $\lambda = c/F$ is the laser wavelength and $\lambda_{ref} = c/F_{ref}$ is the reference wavelength). The OFD 344 may be implemented, e.g. using an optical resonator coupled to a photodetector, as would be known to those skilled in the art. The servo controller 346 is configured to generate the laser control signal 333 responsive to the OFD signal 341, typically to cause the laser 310 to dynamically, i.e. continuously or quasi-continuously, adjust its wavelength $\lambda$ to decrease the wavelength shift $\Delta\lambda$.

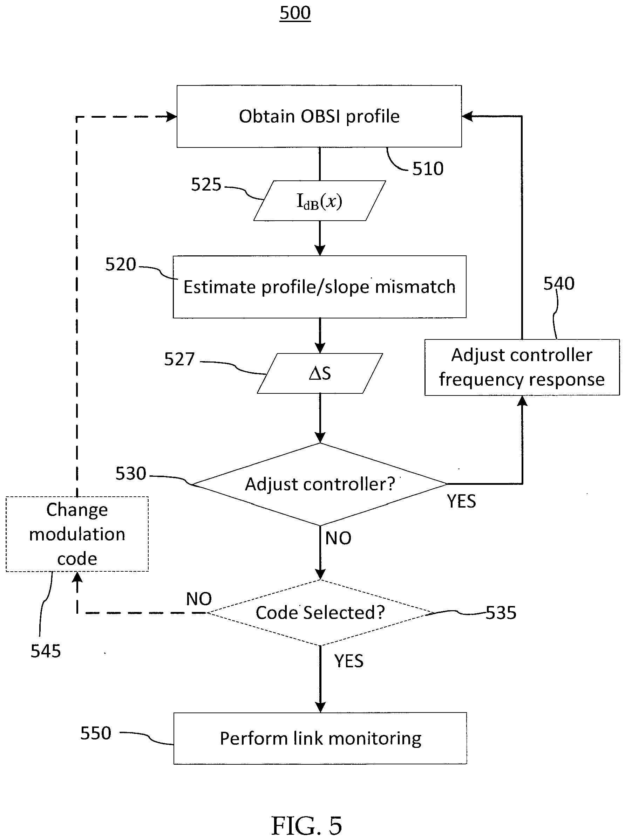

The servo controller 346 has a frequency response $C(f) = s(f)/u(f)$ that is tunable based on a signal 351 generated by the processing unit 350; here $s(f)$ and $u(f)$ are corresponding spectral components of the laser control signal 333 and the OFD signal 341, respectively, at an electrical frequency $f$. In some implementations, the laser controller 330 is configured to adjust the frequency response $C(f)$ of the server controller 346, by means of the signal 351, based on a measure of the OBSI profile mismatch estimated by the processing unit 350, each such adjustment causing the laser wavelength $\lambda$ to respond somewhat differently to changes in the OFD signal 341. In an example implementation, the laser controller 330 is configured to adjust the controller frequency response $C(f)$ so as to decrease a measure 527 of the OBSI profile mismatch, as described below with reference to FIG. 5 and method 500.

The servo controller 346 may be some version of a conventional PID controller that is configured to respond to the OFD signal 341 according to at least two of a proportional ("P") response, an integral ("I") response, and a derivative ("D") response, in which a relative weight of at least one of said "P", "I", and "D" responses is adjustable based on the signal 351, as may be described by equation (4). In such embodiments, parameter(s) of the servo controller 346 that are tunable responsive to the profile mismatch signal 351 may include one, two, or all three of relative weights $w_P$, $w_I$, and $w_D$ of the "P", "I", and "D" responses in the laser control signal 333.

$$S_L(t) = w_P \cdot S_F(t) + w_I \cdot \int_0^T S_F(t - t`)dt` + w_D \cdot {}^d/_{dt} S_F(t) \qquad (4)$$

In equation (4), $S_L(t)$ denotes the laser control signal 333, $S_F(t)$ denotes the OFD signal 341, and $t$ denotes time. The integration in equation (4) is over some time period $T$, which may also be a variable control parameter in some implementations.

In some implementations, the laser controller 330 may include a software module or a hardware logical circuit that generates signals to iteratively adjust one or more of the PID weights $w_P$, $w_I$, and $w_D$ used by the servo controller 346 and determines a set of the PID weights that suitably decreases the estimated OBSI profile mismatch, e.g. 527 (FIG. 5) to a level enabling a target sensitivity of the sensor apparatus 300 to changes in the light propagation conditions along the optical fiber line 360.

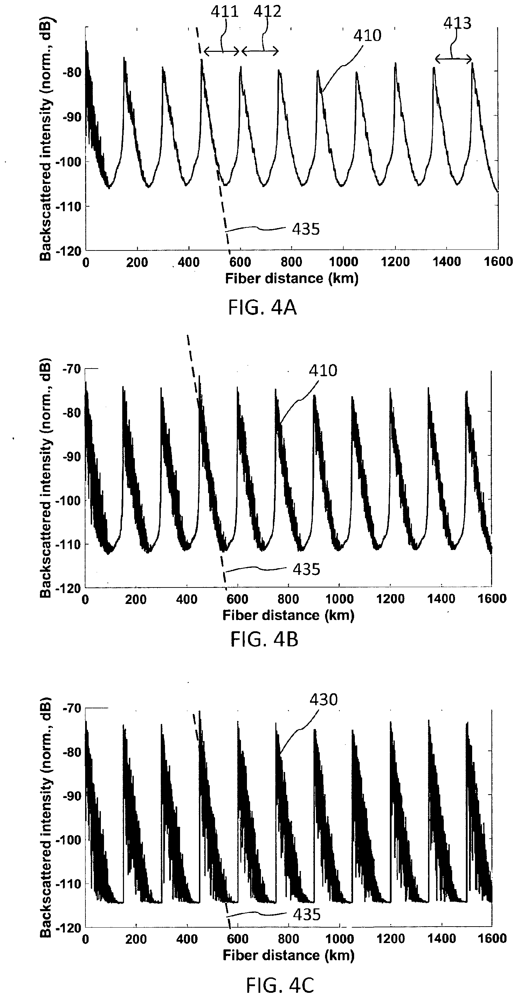

FIGs. 4A, 4B, and 4C illustrate how, according to computer simulations, a choice of PID weights used by the laser controller 330 may influence the OBSI profile 325 of an example optical fiber line having 11 spans of 150 km long stands of standard SMF optical fiber. Simulations illustrated in FIGs. 4A-4C were performed for a MIMO 128-PSK CAZAC modulation code and a symbol rate of 0.5 MHz. Dashed lines indicate a reference profile 435 for one of the spans, with the slope of the reference profile 425 ("reference slope") determined by the known optical loss of the SMF per unit length, and vertical offsets chosen to fit the simulated OBSI profile estimates at the start of the span. FIGs. 4A, 4B, and 4C illustrate three different choices of the PID parameters of the laser controller, resulting in OBSI profiles 410, 420, and 430. Peaks in these profiles correspond to locations of optical amplifiers in the optical fiber line. Segments of each of these profiles between consecutive peaks, e.g. 411, 412, 413 ("one-span portions"), correspond to spans of the optical fiber line. As can be seen from these figures, the dynamic range of the estimated OBSI profile, and thus the sensitivity of OBSI measurements at the tail ends of the optical spans, can be significantly improved by suitably tuning the frequency response of the laser frequency controller, e.g. by a suitable choice of the PID parameters.

Referring now also to FIG. 5, the laser controller 330 may be configured to implement a method 500 for controlling the wavelength of a laser source of a sensor apparatus for monitoring the intensity of optical backscattering along an optical fiber line in a manner that may enhance the sensitivity of backscattering intensity measurements at tail ends of long optical fiber spans and/or large distances from the sensing apparatus. In the following, the method 500 is described by way of example with reference primarily to controlling the wavelength $\lambda$ of the laser 310 of the sensor apparatus 300 of FIG. 3 connected to the multi-span optical fiber line 260 of FIG. 2, as an example of the optical fiber line 360..

In an example implementation, the method 500 includes step 510 wherein an OBSI profile 525 of an optical fiber line, e.g. 260, is estimated by coupling modulated probe light, e.g. 103 or 303, into the optical fiber line, and processing phase-sensitive measurements of the return light, e.g. as described above with reference to FIG. 3. The OBSI profile 525 may be any one of the OBSI profiles, e.g., 125, 225, and 325, described above with reference to FIGs. 1A to 4C. The method 500 further includes step 520 wherein the laser controller, e.g. 330, estimates a measure 527 of mismatch between at least a portion of the OBSI profile 525 and a reference profile, e.g. 135 or 435 ("profile mismatch measure 527"), and step 530 wherein a decision may be made whether to adjust a frequency response of a laser controller, e.g. the frequency response $C(f)$ of the server controller 346, is needed. If yes, the frequency response $C(f)$ of the server controller 346 is adjusted at step 540, and the method returns to step 510 to obtain an updated OBSI profile 525, followed by step 520 wherein the measure 527 is updated. Step 530 may include comparing the profile mismatch measure 527 to a threshold or to some previous estimations of the mismatch. In some implementations, step 540 may include adjusting a relative weight of at least one of the proportional response ("P"), the integral response ("I"), and the derivative response ("I") based on said profile mismatch measure 527. In some implementations, the method 500 may stop when the profile mismatch measure 527 falls below a threshold, or a maximum number of iterations is reached.

In some implementations, the method 500 may include using different modulation codes 390 in different iterations of the method, or different sequences of iterations. Accordingly, in some implementations, method 500 may include step 545 of selecting a different modulation code to use at step 510 and repeating the steps 510 and 520 to update the estimation of the profile mismatch measure 527 for the new code. The method may further include step 535 of selecting, among the modulation codes tried, a modulation code corresponding to a lowest profile mismatch, e.g. the smallest value of the profile mismatch measure 527 for the modulation codes used.

In some implementations of the method, the order of steps 530 and 535 may be changed. In some implementations, each step 545 of changing the modulation code may be followed by two or more iterations of the method wherein the modulation code remains the same and the controller frequency response is adjusted (step 540).

Non-limiting examples of different modulation codes 390 that may be tried in different iterations of the method 500 include, e.g., mutually orthogonal binary codes derived from Golay sequences for PDM BPSK, as described e.g. by C. Dorize and E. Awwad, "Enhancing the performance of coherent OTDR systems with polarization diversity complementary codes," in Optics express, 26(10), pp. 12878-12890, 2018, and CAZAC (Constant Amplitude Zero-Autocorrelation Code) sequences for 2M-PSK PDM, $M \geq 1$, e.g. as described by C. Dorize, E. Awwad, S. Guerrier, and J. Renaudier, "Optimal probing sequences for polarization-multiplexed coherent phase OTDR", in Optical Fiber Sensors Conference 2020 Special Edition, G. Cranch, A. Wang, M. Digonnet, and P. Dragic, eds., OSA Technical Digest (Optica Publishing Group, 2020), paper T3.23.

In some implementations, the method 500 may be performed at a stage of initial calibration of the fiber sensing apparatus, e.g., 300, once the apparatus is connected to the optical fiber line to be monitored. The method 500 may also be performed from time to time during normal operation of the apparatus 300, e.g. when the optical fiber line is idle or at times when no significant fiber events is being detected. Embodiments when the method is performed during normal operation of the apparatus 300, e.g. concurrently with sensing a fiber event, may also be contemplated; in such scenarios, the laser controller 330 may select for the profile mismatch estimation those of the fiber spans (e.g. $241_i$) of the optical fiber line (e.g. 260) that are away from the event being detected.

In different implementations, the laser controller may use different measures 527 of the OBSI profile mismatch. In some implementations, the fiber sensing apparatus, e.g. the laser controller thereof (e.g. 130 or 330), may be configured to estimate the profile mismatch measure 527 based on a one-span estimate $I_{1sp}(x)$ of the OBSI profile 525 of the optical fiber line being monitored, FIG. 1B schematically illustrating an example ($I_{dB}(x)$ 125) of such one-span estimate. The one-span estimate $I_{1sp}(x)$ may be, e.g. a portion the estimated OBSI profile 525 of a multi-span optical fiber line, e.g. 260, along a selected optical fiber span, e.g. $241_i$, thereof. The selected span may be, e.g. the longest span of the optical fiber line, or the span that is farthest from the fiber sensing apparatus. In some implementations, the selected span may be selected based on a SNR of the back-scattering measurements for at least a portion of the span; e.g. the selected span may be a span with the lowest SNR at the tail end thereof. In some implementations, the one-span OBSI profile estimate $I_{1sp}(x)$ may be obtained by averaging corresponding portions of the OBSI profile 525 over two or more of the spans (e.g. 411, 412, 413, FIG. 4); here "corresponding portions" are portions of the OBSI profile along different spans corresponding to a same distance from a proximate (to the sensing apparatus) end of each of the spans.

In some implementations, the profile mismatch measure 527 may be a measure of slope mismatch, i.e. mismatch between a slope of the OBSI profile 525 ("estimated slope") and a slope of a reference profile ("reference slope"), i.e. some measure of differences between an estimated slope S of the OBSI profile 525, e.g. a log-linear representation thereof as illustrated in FIG. 1B and FIGs. 4A - 4C, and a reference slope $S_{ref}$ at one or more locations along the optical fiber line. In some implementations, the estimated slope S is computed, e.g., as the slope of a linear approximation $I_{lin}(x) = (S \cdot x + D)$ to the OBSI profile 525 expressed in decibels (dB), $I_{dB}(x)$, or some linearly scaled version thereof, at the specified location or locations. Here, "linear approximation" refers to a functional dependency upon the distance coordinate x, with the estimated slope $S$ and the intensity offset $B$ being fitting parameters. The function $I_{ref}(x) = (S_{ref}x + D)$ is the reference OBSI profile in this example. The estimated slope and the reference slope values may be expressed, e.g., in dB per unit length, e.g. dB per kilometer. The intensity offset "D" is not required in the slope-based computation of the profile mismatch measure 527.

In some implementations, the laser controller, e.g. the processing unit 350 of the laser controller 330, may be configured to estimate the slope mismatch based on one span of the optical fiber line, or based on two or more spans thereof, and compute a difference between that estimated slope and the reference slope. In some implementations, the laser controller, e.g. the processing unit 350, may be configured to apply a linear regression algorithm to a one-span portion (e.g. 411, 412, or 413, FIG. 4A) of a logarithmic representation of the OBSI profile data, e.g. with the backscattering intensity values $I_{dB}(x)$ expressed in dB, the one-span portion corresponding to the selected span or an average OBSI profile of two or more spans, to determine the slope coefficient $S$ of the linear fit to be used as the estimated OBSI profile slope. In such implementations, only one slope difference value $\Delta S$ may be computed and used as the slope mismatch measure 527. In another implementation, local difference values $\Delta S_i$ between local slope estimates $S_i$, $i = 1, ..., N \geq 2$, for the OBSI profile 525, and corresponding reference slope values $S_{ref,i}$, may be computed and suitably combined, e.g. by summing the squares or absolute values thereof, to obtain the profile mismatch measure 527.

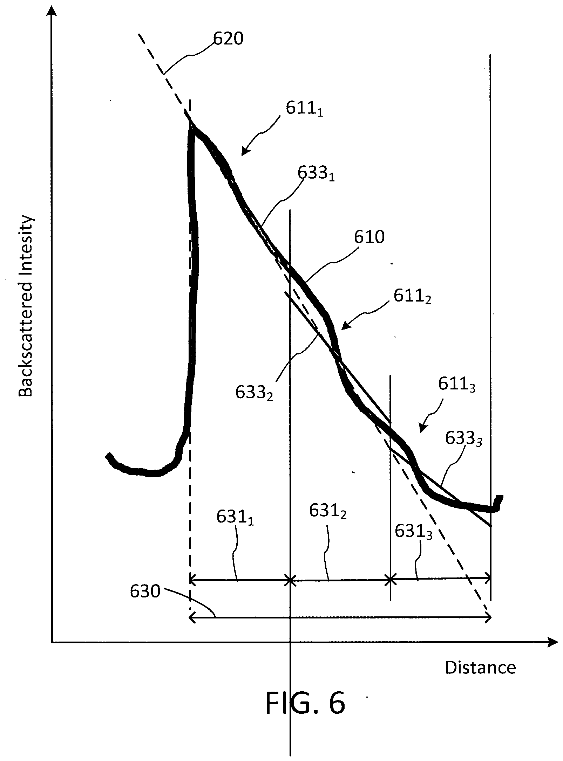

FIG. 6 illustrates a piece-wise slope-based computation of the profile mismatch measure 527 by way of example and with reference to a schematic graphical representations of an example OBSI profile 610. The OBSI profile 610 may be, e.g., a one-span estimate of an OBSI profile of a multi-span optical fiber link, e.g. 260. This one-span OBSI profile estimate 610 may be obtained based on a one-span segment of a multi-span OBSI profile, e.g. as illustrated in FIGs. 4A-4C, said segment corresponding to a selected span 630. This one-span OBSI profile estimate 610 may also be an average of two or more one-span segments of a multi-span OBSI profile.

Referring to FIGs. 3, 5, and 6, in an example execution of method 500 the processing unit 350 of the controller 330 may process, e.g. at step 520, the OBSI profile 610 in some log-linear representation thereof, e.g. with the estimated backscattering intensity values expressed in dB. The processing may include logically dividing the data representing the OBSI profile 610 into $N \geq 2$ spatial blocks 611;, $i = 1, .., N$, corresponding to $N$ segments of 631$_i$ of the span 630, $N = 3$ in the illustrated example. The processing may further include estimating local slope values S, for different ones of the spatial blocks 611;, e.g. by applying a peace-wise linear approximation algorithm to the, e.g., dB-expressed OBSI profile data, computing corresponding slope differences $\Delta S_i = (S_i - S_{ref})$, and combining said differences to obtain the profile mismatch measure $\Delta S$ 527. The local slope values $S_i$ may each be estimated, e.g. based on a linear fit 633$_i$ to the spatial blocks 611$_i$ of the Iaa(x) profile data versus the spatial coordinate x along the corresponding segment 631$_i$ of the span 630.

The reference slope $S_{ref}$ may be estimated, e.g., based on the known loss of the optical fiber for each segment of the span, e.g. $S_{ref} \cong 0.2$ dB/km in some typical example of a uniform SMF fiber along the whole span. In some implementations, the reference slope $S_{ref}$ may be estimated based on a linear fit to a segment of the estimated OBSI profile, e.g., at a proximate (to the sensor apparatus) end of the span. In some implementations, the reference slope $S_{ref}$, determined as described above or in some other way, may be stored in a memory device associated with the sensor apparatus, e.g. at the laser controller 330. In some implementations, different values of the reference slope $S_{ref}$ may be used for different span segments, e.g. when the span includes segments of different optical fibers.

In some implementations, the local slope difference values $\Delta S$; may be combined with different weights to compute the profile mismatch measure 527. In some implementations, relatively greater weights may be assigned to those of the local slope difference values $\Delta S$; that correspond to the span segments that are at the tail end of the span, i.e. at the distal (from the sensor apparatus) end thereof. By way of example, the profile mismatch measure 527, $\Delta S$, may be estimated according to the following equation (5), or some version thereof:

$$\Delta S = \sum_{i=1}^{N} a_i \cdot |\Delta S_i|^2 \qquad (5)$$

where $a_i$ are the weights assigned to corresponding ones of the segments 611, of the OBSI profile 610, and $N$ is the number of such segments for which the local slopes are estimated, $N = 3$ in the example illustrated in FIG. 6. In some implementations, one or more of the spatial blocks 611; of the OBSI profile 610 that are farther along the span 630 from the sensor apparatus, e.g. at the tail end of the span, and thus typically have a lower SNR of the backscattering signal due to the optical attenuation in the fiber, may be assigned a greater weight $a_i$ than one or more of the blocks 611$_i$ at the beginning of the span 610. In some implementations, the summation in the RHS of equation (5) may account for local slope mismatch values estimated for two or more spans of the optical fiber line, e.g. at the tail ends thereof.

The task of estimating the slope of an OBSI profile that has been obtained using coherent, e.g. homodyne, detection as described above, may be complicated by the coherent noise in the measurements of the backscattered light. The presence of the coherent noise manifests itself in rather abrupt changes of the estimated intensity of the backscattered signal between spatially adjacent fiber segments of the gauge length $l_r$ (e.g. 161; and 161$_{i+1}$, FIG. 1). These segment-to-segment changes appear as seemingly uncorrelated variations about a trend line of adjacent intensity values in the estimated OBSI profile and are a consequence of the high frequency (wavelength) stability of the used laser source and the associated coherent fading, or "speckle noise". These variations may be rather large and tend to increase when the wavelength stability of the laser source is further improved, as may become evident by comparing FIGs. 4A, 4B, and 4C; these variations may also be difficult to suppress by time averaging, since the backscattering intensity from each gauge-length fiber segment (e.g. $161_i$) remains approximately constant in the absence of significant changes in the light propagation conditions along the fiber line.

The rising coherent noise in the OBSI profile estimated at the "native" spatial resolution $l_r$ (the gauge length) may therefore complicate both the slope estimation and the detection by the end user of potential malfunctions of the optical fiber line based on the OBSI profile.

Therefore, in some implementations, the sensor apparatus, e.g. 100 or 300, may be configured to perform spatial averaging of an OBSI profile obtained by the interrogator 120 or 320. In one typical example, the OBSI processor 326 of the interrogator 320 may first generate, e.g. at step 510 of method 500, an estimate of the OBSI profile of the optical fiber line 360 at the native spatial resolution $l_r$ defined by the gauge length, e.g. as a sequence of backscattering intensity values $I(k)$ wherein consecutive values $I(k)$ and $I(k+1)$ represent backscattering intensity from two consecutive segments of the optical fiber of the gauge length $l_r = 2vT_s$ each. The sensor apparatus, e.g. the laser controller 330 or the processor 326, may then perform spatial averaging of the native-resolution estimate of at least a portion of the OBSI profile, e.g. using a sliding window of width corresponding to a fiber length $L_r$ that is, e.g., 2 to 200 times greater than $l_r$, or 10 to 100 times greater in some example implementations.

In some implementations, the sensing apparatus may use a greater symbol rate when performing the method 500 to tune the frequency response of the laser controller, e.g. 130 or 330, and/or to select the modulation code 390 than during normal operation of monitoring the optical fiber line. The sensing apparatus may then perform the spatial averaging to estimate the slope (profile) mismatch 527 and to execute method 500. In some implementations, the spatial averaging described above may be performed by the interrogator 320 to provide a smooth version of the OBSI estimate 325 to the end user.

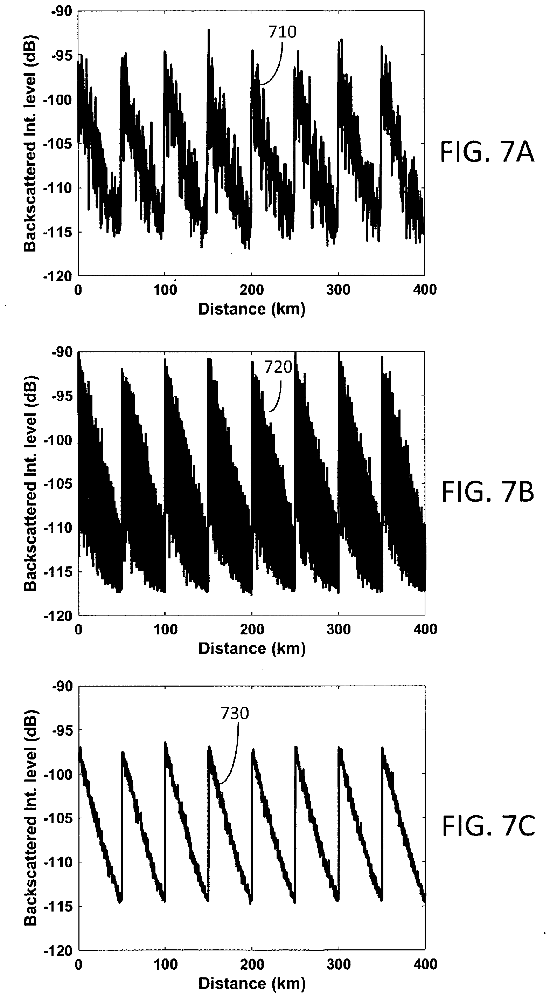

FIGs. 7A, 7B, and 7C illustrate example OBSI profiles that may be obtained using the laser control method described above for a 400km long, 8-span optical fiber line using different symbol rate with and without spatial averaging. FIGs. 7A and 7B illustrate native-resolution estimates 710, 720 of the OBSI profile of the link obtained using symbol rates $F_s = 1\backslash T_s$ of 0.5 MHz (710, 200m spatial resolution) and 32 MHz (720, 3m spatial resolution), respectively. FIG. 7C illustrates the high-resolution estimate 730 of the OBSI profile of FIG. 7B after spatial averaging over a 200m spatial window (64 consecutive intensity values) and 64:1 downsampling. As can be clearly seen by comparing FIGs. 7B and 7C, the spatial averaging can greatly reduce the coherent noise, thereby simplifying both the slope determination at the stage of tuning the laser controller and/or selecting the modulation code, and the detection of fiber events during normal operation of the sensor apparatus.

In some implementations, instead of the spatial averaging, the laser controller of a sensor apparatus for monitoring backscattering intensity along an optical fiber, e.g. the processing unit 350 of the controller 330 of FIG. 3, may be configured to estimate the slope mismatch 527 based on a selection of a "high intensity" sub-set $I(i_k)$ of the full sequence of backscattering intensity samples $I(i)$ contained in the OBSI profile 525. The samples $I(i_k)$ for the sub-set may be selected based on their values, e.g. by selecting the largest backscattering intensity sample $I(i)$ within each subsequent $K$-long sequence of the $I(i)$ samples. The resulting subset of the samples represents an estimate of the OBSI profile 525 at a lower spatial resolution of $L_r = K \cdot l_r$ but may be better adapted for the slope mismatch estimation due to a lower coherent noise.

Advantageously, the receiver-assisted laser frequency stabilization in a sensor apparatus configured for monitoring optical backscattering intensity along optical fibers, which is described above with reference to some example implementations, is expected to provide an improved dynamic range of the backscattering intensity measurements, thereby facilitating optical loss measurements at greater distances along the optical fiber line and/or at tail ends of long fiber spans.

An example embodiment described above, e.g. in the summary section and with reference to any one or more of the FIGs. 1A to 7, provides an apparatus comprising an optical sensor (e.g. 100; FIG. 1A; 300, FIG. 3) comprising a laser (e.g. 110; FIG. 1A; 310, FIG. 3) and a laser controller (e.g. 130; FIG. 1A; 330, FIG. 3). The optical sensor is configured to split light (e.g. 101; FIG. 1A; 301, FIG. 3) from the laser into probe light (e.g. 103; FIG. 1A; 303, FIG. 3) and reference light (e.g. 305, FIG. 3), to modulate the probe light, to couple modulated probe light (e.g. 321, FIG. 3) into an optical fiber line (e.g. 160; FIG. 1A; 260, FIG. 2; 360, FIG. 3), and to make measurements on a superposition of the reference light and light (e.g. 165; FIG. 1A; 261, FIG. 2; 361, FIG. 3) returned to the optical sensor by, at least in part, backscattering from the optical fiber line. The optical sensor is further configured to estimate a backscattering intensity profile (e.g. 125; FIG. 1B; 225, FIG. 2; 325, FIG. 3; 410, FIG. 4A; 420, FIG. 4B; 430, FIG. 4C; 710, FIG. 7A; 720, FIG. 7B; 730, FIG. 7C) based on said measurements, the backscattering intensity profile representing a set of backscattering intensity values pertaining to a set of longitudinal sections (e.g. $161_1$, $161_i$, $161_{i+1}$, FIG. 1A) of the optical fiber line, wherein each of the backscattering intensity values represents an intensity of light backscattered from a respective longitudinal section of the optical fiber line. The laser controller is configured to adjust a wavelength of the laser based at least in part on mismatch (e.g. 527, FIG. 5) between at least a portion of the backscattering intensity profile (e.g. 125, FIG. 1B; 411, FIG. 4A; 610, FIG. 6) and a reference profile (e.g. 135, FIG. 1B; 435, FIG. 4A; 620, FIG. 6).

In some implementations, the laser controller (e.g. 130; FIG. 1A; 330, FIG. 3) is configured to adjust said wavelength so as to reduce a measure of slope mismatch between the at least a portion of the backscattering intensity profile and the reference profile.

In any of the above implementations, the optical fiber line (e.g. 260, FIG. 2) may comprise one or more spans (e.g. 241, FIG. 2) of optical fiber and the laser controller (e.g. 130; FIG. 1A; 330, FIG. 3) may be configured to estimate the measure of slope mismatch based on a one-span portion (e.g. 125, FIG. 1B; 411, FIG. 4A; 610, FIG. 6) of the backscattering intensity profile.

In any of the above implementations, the optical fiber line may comprise a sequence of the spans ($241_1$, $241_1$, $241_{Nsp}$) of optical fiber, and the laser controller (e.g. 130; FIG. 1A; 330, FIG. 3) may be configured to estimate the measure of slope mismatch (e.g. 527, FIG. 5) based on two or more one-span portions (e.g. 411, 412, 413, FIG. 4A) of the backscattering intensity profile.

In any of the above implementations, the laser controller (e.g. 130; FIG. 1A; 330, FIG. 3) may be configured to estimate a measure of slope mismatch based on a plurality of local slope mismatch values estimated for different segments (e.g. 411, 412, 413, FIG. 4A; $611_1$, $611_2$, $611_3$, FIG. 6) of the backscattering intensity profile. In some of such implementations, the laser controller (e.g. 130; FIG. 1A; 330, FIG. 3) may be configured to assign different weights to at least two of the local slope mismatch values; e.g., different weights $a_1$ and $a_3$ may be assigned to the slope mismatch values $\Delta S_1$ and $\Delta S_3$ estimated for segments $611_1$ and $611_3$, respectively, of the optical fiber span 610, FIG. 6, e.g., so that $a_1 < a_3$.

In any of the above implementations, the laser controller (e.g. 130; FIG. 1A; 330, FIG. 3) may include a laser wavelength stabilization circuit (e.g. 340, FIG. 3) and may be configured to adjust a frequency response, e.g. $C(f)$, of said circuit based at least in part on the mismatch (e.g. 527) between at least a portion of the backscattering intensity profile and the reference profile. In some of such implementations, the laser wavelength stabilization circuit may be configured to respond to changes of the wavelength according to at least two of a proportional response, an integral response, and a derivative response, and the laser controller (e.g. 130; FIG. 1A; 330, FIG. 3) may be configured to adjust a relative weight of at least one of said responses based on the mismatch (e.g., 527) between at least a portion of the backscattering intensity profile and the reference profile.

In any of the above implementations, the optical sensor (e.g. 100; FIG. 1A; 300, FIG. 3) may be configured to modulate the probe light according to any one of two or more modulation codes, and the laser controller is configured to select between the two or more modulation codes based on said mismatch between at least a portion of the backscattering intensity profile and the reference profile.

In any of the above implementations, said measurements of the superposition of the reference light (e.g. 305) and the return light (e.g. 161, 261, 361) may comprise at least one of intensity measurements and phase measurements.

An example embodiment described above, e.g. in the summary section and with reference to any one or more of the FIGs. 1A to 7, provides a method (e.g. 500, FIG. 5) comprising: splitting light (e.g. 101, FIG. 1A; 301, FIG. 3) from a laser (e.g. 110; FIG. 1A; 310, FIG. 3) into probe light (e.g. 103, FIG. 1A; 303, FIG. 3) and reference light (e.g. 305, FIG. 3); coupling modulated probe light (e.g. 103, FIGs. 1A and 2; 321, FIG. 3) into an optical fiber line (e.g. 160; FIG. 1A; 260, FIG. 2; 360, FIG. 3) to propagate therealong; making measurements on a superposition of the reference light and light (e.g. 165; FIG. 1; 261, FIG. 2; 361, FIG. 3) returned by the optical fiber line by, at least in part, backscattering at different locations along the optical fiber line; estimating a backscattering intensity profile (e.g. 125; FIG. 1B; 225, FIG. 2; 325, FIG. 3; 410, FIG. 4A; 420, FIG. 4B; 430, FIG. 4C; 710, FIG. 7A; 720, FIG. 7B; 730, FIG. 7C) along said optical fiber line based on said measurements; and adjusting a wavelength ($\lambda$) of the laser based at least in part on mismatch (e.g.. 527, FIG. 5) between at least a portion of the backscattering intensity profile (e.g. 125, FIG. 1B; 411, FIG. 4A; 610, FIG. 6) and a reference profile (e.g. 135, FIG. 1B; 435, FIG. 4A; 620, FIG. 6).

Some implementations of the method may comprise modulating the probe light according to a modulation code sequence (e.g. 390, FIG. 3) prior to coupling into the optical fiber line. Some of such implementations of the method may comprise selecting (e.g. at 545, FIG. 5) between two or more different modulation code sequences based at least in part on the mismatch (e.g. 527, FIG. 5).

Any of the above implementations of the method may comprise measuring variations of the wavelength with time and responding to said variations to stabilize the wavelength according to at least two of a proportional response, an integral response, and a derivative response. Such implementations of the method may comprise adjusting a relative weight of at least one of said responses based on said mismatch between at least a portion of the backscattering intensity profile and the reference profile.

In any of the above implementations of the method, the mismatch between at least a portion of the backscattering intensity profile and a reference profile may be estimated based on slope mismatch between the at least a portion of the backscattering intensity profile and the reference profile.

The example embodiments described above are not intended to be limiting, and many variations will become apparent to a skilled reader having the benefit of the present disclosure. For example, modulation code sequences that are different from those described above may be used for the backscattering intensity probing and/or monitoring. Furthermore, the receiver-assisted laser frequency stabilization as described above may be combined with probe light modulated using modulation formats different from those described above, including but not limited to amplitude modulation and spread-spectrum modulation. In the description above, for purposes of explanation and not limitation, specific details, such as particular architectures, interfaces, techniques, etc., are set forth in order to provide a thorough understanding of the present invention. In some instances, detailed descriptions of well-known devices, circuits, and methods are omitted so as not to obscure the present disclosure with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Furthermore, any mathematical concepts (such as functions, values, sets, sequences) mentioned in this disclosure may be represented or approximated using digital or analog circuitry, or a combination of digital and analog circuitry. For example, a continuous profile may be approximated by a discrete profile. Inversely, a discrete profile may be approximated by a continuous profile, e.g. by interpolation or smoothing of an original profile, e.g. using polynomials, splines, or sync functions.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. An apparatus comprising:
   an optical sensor (100, 300) comprising a laser (110, 310) and a laser controller (130, 330);

   wherein the optical sensor is configured to split light (101, 301) from the laser into probe light (103, 303) and reference light (305), to modulate the probe light, to couple modulated probe light (103, 321) into an optical fiber line (160, 260, 360), and to make measurements on a superposition of the reference light and light returned to the optical sensor by, at least in part, backscattering from the optical fiber line;
   wherein the optical sensor is further configured to estimate a backscattering intensity profile (125, 225, 325, 410, 420, 430, 525, 610, 710, 720, 730) based on said measurements, the backscattering intensity profile representing a set of backscattering intensity values pertaining to a set of longitudinal sections ($161_1$, $161_i$, $161_{i+1}$) of the optical fiber line, wherein each of the backscattering intensity values represents an intensity of light backscattered from a respective longitudinal section of the optical fiber line; and
   wherein the laser controller is configured to adjust a wavelength of the laser based at least in part on mismatch (527, $\Delta S$) between at least a portion of the backscattering intensity profile (125, 411, 610) and a reference profile (135, 435, 620).

2. The apparatus of claim 1 wherein the laser controller is configured to adjust said wavelength so as to reduce a measure of slope mismatch between the at least a portion of the backscattering intensity profile and the reference profile.

3. The apparatus of claim 2 wherein the optical fiber line comprises one or more spans (241) of optical fiber and wherein the laser controller is configured to estimate the measure of slope mismatch based on a one-span portion (125, 411, 610) of the backscattering intensity profile.

4. The apparatus of claim 3 wherein the optical fiber line comprises a sequence of the spans ($241_1$, $241_1$, $241_{Nsp}$) of optical fiber and wherein the laser controller is configured to estimate the measure of slope mismatch based on two or more one-span portions (411, 412, 413) of the backscattering intensity profile.

5. The apparatus of claim 2, 3, or 4, wherein the laser controller is configured to estimate the measure of slope mismatch based on a plurality of local slope mismatch values estimated for different segments (411, 412, 413; $611_1$, $611_2$, $611_3$) of the backscattering intensity profile.

6. The apparatus of claim 5, wherein the laser controller is configured to assign different weights to at least two of the local slope mismatch values.

7. The apparatus of any one of claims 1 to 6, wherein the laser controller includes a laser wavelength stabilization circuit (340) and is configured to adjust a frequency response of said laser wavelength stabilization circuit based at least in part on the mismatch between at least a portion of the backscattering intensity profile and the reference profile.

8. The apparatus of claim 7 wherein the laser wavelength stabilization circuit is configured to respond to changes of the wavelength according to at least two of a proportional response, an integral response, and a derivative response, and wherein the laser controller is configured to adjust a relative weight of at least one of said responses based on the mismatch between at least a portion of the backscattering intensity profile and the reference profile.

9. The apparatus of any one of claims 1 to 8 wherein the optical sensor is configured to modulate the probe light according to any one of two or more modulation codes (390), and the laser controller is configured to select between the two or more modulation codes based on said mismatch between at least a portion of the backscattering intensity profile and the reference profile.

10. The apparatus of any one of claims 1 to 9, wherein said measurements comprise at least one of intensity measurements and phase measurements.

11. A method comprising:

   splitting light (101, 301) from a laser into probe light (103, 303) and reference light (305);
   coupling modulated probe light (103, 321) into an optical fiber line (160, 260, 360) to propagate therealong;
   making measurements on a superposition of the reference light and light returned by the optical fiber line by, at least in part, backscattering at different locations along the optical fiber line;
   estimating a backscattering intensity profile (125, 225, 325, 410, 420, 430, 525, 610, 710, 720, 730) along said optical fiber line based on said measurements, the backscattering intensity profile representing a set of back-scattering intensity values pertaining to a set of longitudinal sections ($161_1$, $161_i$, $161_{i+1}$) of the optical fiber line, wherein each of the backscattering intensity values represents an intensity of light backscattered from a respective longitudinal section of the optical fiber line; and
   adjusting a wavelength of the laser based at least in part on mismatch (527, $\Delta S$) between at least a portion of the backscattering intensity profile (125, 411, 610) and a reference profile (135, 435, 620).

12. The method of claim 11 comprising modulating the probe light according to a modulation code sequence (390) prior to coupling into the optical fiber line.

13. The method of claim 12 comprising selecting between two or more different modulation code sequences based at least in part on the mismatch.

14. The method of claim 11, 12, or 13, comprising:

   measuring variations of the wavelength with time and responding to said variations to stabilize the wavelength according to at least two of a proportional response, an integral response, and a derivative response; and
   adjusting a relative weight of at least one of said responses based on said mismatch between at least a portion of the backscattering intensity profile and the reference profile.

15. The method of any one of claims 11 to 14, wherein the mismatch between at least a portion of the backscattering intensity profile and a reference profile is estimated based on slope mismatch between the at least a portion of the backscattering intensity profile and the reference profile.

FIG. 1A

FIG. 1B

FIG. 2

FIG. 3

EP 4 726 349 A1

FIG. 4A

FIG. 4B

FIG. 4C

<u>500</u>

FIG. 5

FIG. 6

FIG. 7A

FIG. 7B

FIG. 7C

## EUROPEAN SEARCH REPORT

**Application Number**

EP 24 31 5470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/328809 A1 (CHEN HONGXIN [US] ET AL) 16 November 2017 (2017-11-16) * paragraph [0280] - paragraph [0329]; figures 11-14 * | 1-15 | INV. G01M11/00 |
| A | EP 3 505 899 A1 (YOKOGAWA ELECTRIC CORP [JP]) 3 July 2019 (2019-07-03) * the whole document * | 1-15 | |
| A | AWWAD ELIE ET AL: "Detection-Localization-Identification of Vibrations Over Long Distance SSMF With Coherent $\Delta \phi$-OTDR", JOURNAL OF LIGHTWAVE TECHNOLOGY, IEEE, USA, vol. 38, no. 12, 7 May 2020 (2020-05-07), pages 3089-3095, XP011792109, ISSN: 0733-8724, DOI: 10.1109/JLT.2020.2993167 [retrieved on 2020-06-08] * the whole document * | 1-15 | |
| | | | **TECHNICAL FIELDS SEARCHED (IPC)** |
| A | EP 3 719 537 A1 (SICK AG [DE]) 7 October 2020 (2020-10-07) * the whole document * | 1-15 | G01M |

The present search report has been drawn up for all claims

| Place of search | Date of completion of the search | Examiner |
|---|---|---|
| The Hague | 4 March 2025 | Gruss, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5470

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | Publication date | Patent family member(s) | Publication date |
|---|---|---|---|
| US 2017328809 A1 | 16-11-2017 | US 2016123837 A1<br>US 2017328809 A1<br>WO 2014201057 A2 | 05-05-2016<br>16-11-2017<br>18-12-2014 |
| EP 3505899 A1 | 03-07-2019 | CN 109974973 A<br>EP 3505899 A1<br>JP 6791113 B2<br>JP 2019117167 A<br>US 2019195731 A1 | 05-07-2019<br>03-07-2019<br>25-11-2020<br>18-07-2019<br>27-06-2019 |
| EP 3719537 A1 | 07-10-2020 | EP 3719537 A1<br>JP 6976373 B2<br>JP 2020169983 A | 07-10-2020<br>08-12-2021<br>15-10-2020 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24189130 A

**Non-patent literature cited in the description**

- **C. DORIZE** ; **E. AWWAD**. Enhancing the performance of coherent OTDR systems with polarization diversity complementary codes. *Optics express*, 2018, vol. 26 (10), 12878-12890

- Optimal probing sequences for polarization-multiplexed coherent phase OTDR. **C. DORIZE** ; **E. AWWAD** ; **S. GUERRIER** ; **J. RENAUDIER**. Optical Fiber Sensors Conference 2020. Optica Publishing Group, 2020